Europäisches Patentamt

(19) European Patent Office

Office européen des brevets

(11) EP 0 963 881 A1

(12) EUROPEAN PATENT APPLICATION

(43) Date of publication:
15.12.1999 Bulletin 1999/50

(51) Int. Cl.$^6$: B60R 21/18

(21) Application number: 99111129.5

(22) Date of filing: 08.06.1999

(84) Designated Contracting States:
AT BE CH CY DE DK ES FI FR GB GR IE IT LI LU
MC NL PT SE
Designated Extension States:
AL LT LV MK RO SI

(30) Priority: 08.06.1998 JP 15929698

(71) Applicant: TAKATA CORPORATION
Shiga 529-1388 (JP)

(72) Inventor: Daisuke, Yoshioka
Echi-gun, Shiga 529-1388 (JP)

(74) Representative:
Gramm, Werner, Prof. Dipl.-Ing.
GRAMM, LINS & PARTNER GbR,
Theodor-Heuss-Strasse 1
38122 Braunschweig (DE)

(54) Inflatable safety belt

(57) An inflatable belt includes an envelope-like or elongated belt body (10), which is folded in a band-like configuration, and a cover (2d), which encloses the belt body (10). The belt body (10) has a middle or wide portion (10B) having a wider width, a widening portion (10A), which has a gradually increasing width from the first end (10a) to the wide portion (10B), and a narrowing portion (10C), which has a gradually decreasing width from the wide portion (10B) to the second end (10b). This configuration ensures that the inflatable belt (10) assumes a specific volume when it expands. Moreover, the impact to the occupant is lessened and the occupant is protected, without increasing the output of the gas generator (9) or possibly even reducing the output of the gas generator (9).

Fig 1

## Description

### Background of the Invention

#### Field of the Invention

The present invention relates to a seat belt for protecting a vehicle occupant during a vehicle collision and, more particularly, to an inflatable belt which is capable of being inflated with gas.

#### Description of the Related Art

An inflatable belt device of this type is disclosed in Japanese Unexamined Patent Publication H05-85301 and is shown in Figures 2(a) and 2(b). This passenger protective device 1 includes a shoulder belt 2 extending diagonally from the right side to the left side of a passenger, a lap belt 3 extending from the right side to the left side of the passenger, a buckle 4 fixed to, for example, a vehicle floor, a tongue 5 to be inserted into and engaged with the buckle 4 when the passenger wears the belt, and an intermediate guide 6 for guiding the shoulder belt 2.

The shoulder belt 2 includes a webbing 2a, which is the same as a typical conventional seat belt, and an inflatable belt 2b connected to an end of the webbing 2a. The webbing 2a is slidably hung in the intermediate guide 6. The other end of the webbing 2a is connected to a shoulder belt retractor 7 with an emergency locking mechanism (ELR), which is fixed to the vehicle body. The webbing 2a is arranged such that it is wound into the shoulder belt retractor 7.

The inflatable belt 2b is positioned so that it contacts the passenger and is connected to the tongue 5 at an end opposite to the end connected to the webbing 2a. The lap belt 3 is composed of a webbing, which is the same as a typical conventional sear belt, having one end is connected to the tongue 5 and the other end connected to a lap belt retractor 8 (ELR), which is fixed to the vehicle body. A gas generator 9 is connected to the buckle 4. The gas generator 9 is actuated in emergency situations, e.g., vehicle collisions, to generate high-pressure gas. The tongue 5 and the buckle 4 are each provided with passages for introducing gas from the gas generator 9 into the inflatable belt 2b.

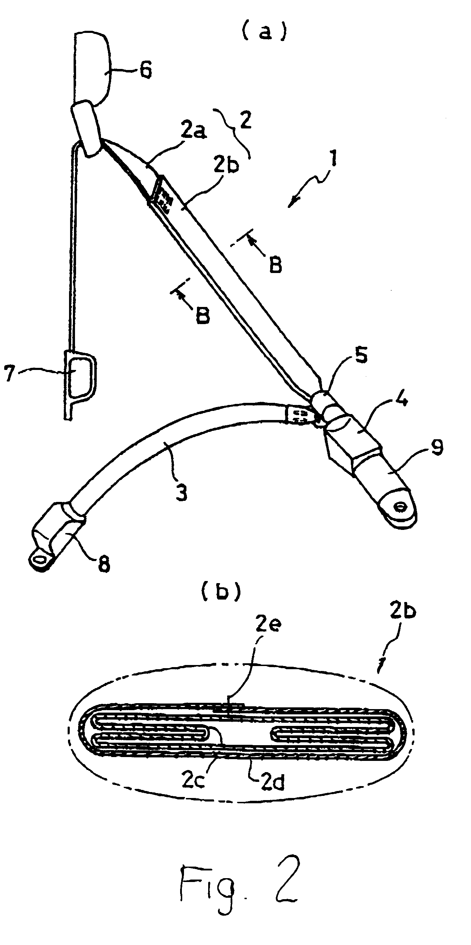

The inflatable belt 2b of the shoulder belt 2 includes a belt body 2c formed in an envelope-like shape and a cover 2d. The belt body 2c is folded, shown in solid lines in Figure 2(b), and then covered by the cover 2d. The ends of the cover 2d are then connected to each other by stitching 2e so that the inflatable belt 2b is maintained in a band-like configuration. The stitching 2e of the cover 2d is easily torn by the force of the shoulder belt 2 expanding when the gas generator 9 is actuated so that the inflatable belt 2b is deployed, shown by a two-dot chain line in Figure 2(b).

The belt body 2c is made of, for example, rubber coated fabric and the cover 2d is made of a flexible knit with excellent stretchability.

In the inflatable belt device as described above, the belt body is inflated to deploy the inflatable belt, resulting in a shrinkage force being applied in the longitudinal direction so that the belt body is stretched in the radial direction, thereby reducing the impact applied to the upper part of the occupant. Therefore, the larger the volume of the belt body when inflated, the higher the effect of reducing the impact, i.e., the greater the protection afforded to the occupant. On the other band, the larger volume requires larger output of the gas generator, thereby increasing the cost.

These difficulties or problems with the current alternatives are not intended to be exhaustive, but are many which tend to reduce the desirability of known seat belts. Other notable problems may exist; those presented above, however, should be sufficient to demonstrate that devices appearing in the past are amenable to worthwhile improvement.

### Summary of the Invention

Accordingly, it is a general object of the invention to provide an inflatable belt that will obviate or minimize the above difficulties.

It is a specific object of the invention to provide an inflatable belt that ensures a specific volume when the inflatable belt expands.

It is another object of the invention to provide an inflatable that reduces the impact on the vehicle occupant when inflating.

It is a further object of the invention to provide greater protection to a vehicle occupant during an impact.

It is yet a further object of the invention to provide an inflatable belt that results in greater protection without increasing the output of a gas generator and, possibly, even reducing the output of the gas generator.

A preferred embodiment, which is intended to accomplish at least some of the above objects, includes an elongated belt body, into which the gas is introduced, having a wide portion, widening and narrowing portions, and first and second ends, wherein a width of at least one of the widening and narrowing portions decreases from the wide portion to the respective first and second ends; and a cover enclosing the elongated belt body.

Additional objects and advantages of the invention will be set forth in the following description of the preferred embodiments and, in part, will be obvious from the description or through practicing the invention. The objects and advantages may be realized through the instrumentalities and combinations particularly pointed out in the appended claims.

### Brief Description of the Drawings

The accompanying drawings, which are incorporated in and constitute a part of the specification, illustrate presently preferred embodiments of the invention, and, together with the above general description and the following detailed description, serves to explain the principles of the invention.

Figure 1(a) is a general view showing an inflatable belt according to the invention; and Figure 1(b) is a plan view of an envelope-like belt body.
Figure 2(a) is a general perspective view showing a conventional inflatable belt device; and Figure 2(b) is an enlarged view showing a section taken along a line B-B of Figure 2(a).

## Detailed Description of the Preferred Embodiment

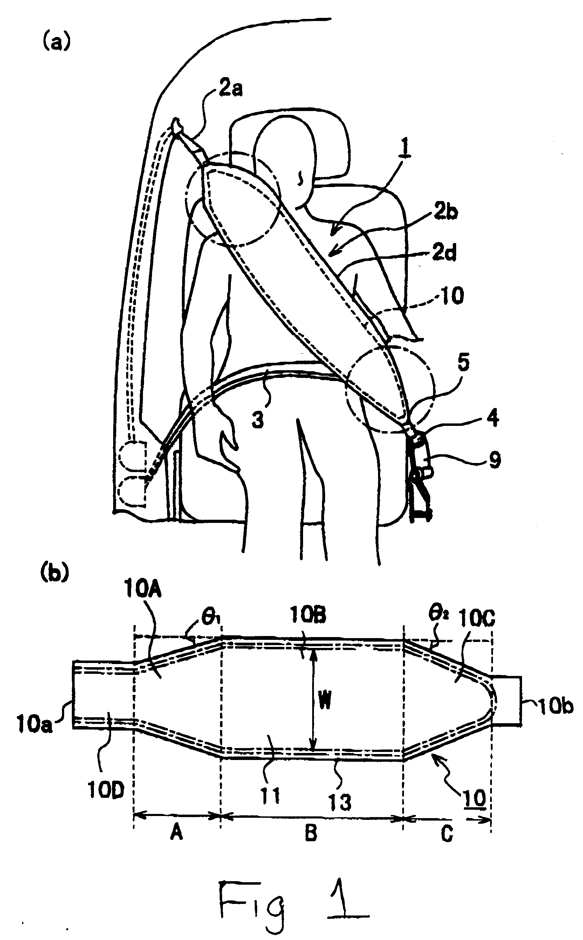

Referring now to the drawings, and initially to Figures 1(a) and 1(b), there will be seen an envelope-like or elongated belt body 10 preferably made from two base fabrics 11, 12 (12 is not shown) that are sewn with a sewing yarn 13.

The inflatable belt device preferably has the same structure as the conventional inflatable belt device shown in Figures 2(a), 2(b), except for the configuration of the belt body 10.

The inflatable belt 10 includes a wide portion 10B, which is at a middle portion along the longitudinal direction of the belt body 10 and has a wide width, a first end 10a, which is connected to a tongue 5, and an other or second end 10b, which is connected to a webbing 2a. The widths of portions from the middle area 10B to the ends 10a, 10b gradually decrease. In Figure 1(b), the wide middle area 10B is referred to as a "wide portion," the area 10A having a width that gradually increases from the first end 10a is referred to as a "widening portion," and the area 10C having a width that gradually decreases to the second end 10b is referred to as a "narrowing portion." The area 10D is a gas introducing portion such has a narrow and constant width and is thus referred to as a "narrow portion."

It is preferable that the lengths A, B, C of the widening portion 10A, the wide portion 10B, and the narrowing portion 10C, respectively, are as follows:

A = 10-50 %, preferably 20-40 %;
B = 0-80 %, preferably 20-60 %; and
C = 10-50%, preferably 20-40 %,
wherein A + B + C = 100%.

If the length B of the wide portion 10B is excessively long, the effectiveness of the present invention is greatly decreased. On the other band, if the lengths A, C of the widening portion 10A and the narrowing portion 10C, respectively, are excessively long, then the effect of reducing an impact may be impaired.

The maximum width of the wide portion 10B is preferably in a range between 10 and 25 cm. In Figure 1(b), the inclination $\theta_1$, $\theta_2$ representing the degree of change in the widths of the widening portion 10A and the narrowing portion 10C, respectively, are preferably in a range between 0 and 45°.

Though the belt body 10 shown in Figure 1(b) has portions 10A, 10C, which have decreasing widths in a direction from the wide portion 10B toward the respective ends of the belt body 10, it may have only one portion in which the width is decreased in a direction toward one of the ends according to the present invention.

According to the invention, a portion contributing to reducing the impact has a wide width and the portions not directly contributing to reducing the impact have narrow widths. It is preferable that both end portions of the belt body have narrow widths.

It is preferable, as shown in Figure 1(b), if the widening portion and the narrowing portion of the belt body are symmetrical about the longitudinal center line. The widening portion and the narrowing pardon, however, may be right-left asymmetrical.

The belt body according to the present invention employs base fabrics in a predetermined shape with different widths in the longitudinal direction and can be easily made by welding and/or sewing according to well-known methods.

An inflatable belt of the present invention is a belt for protecting an occupant in a vehicle seat, into which gas is introduced through one end thereof so that the belt is inflated. The inflatable belt includes an envelope-like belt body into which the gas is introduced and a cover enclosing the envelope-like belt body. The envelope-like belt body includes a middle portion having a wide width and a portion positioned at one end or both ends of the belt body having a decreasing width in a direction from the middle portion toward the respective end.

The middle portion functions to efficiently absorb and reduce the impact on an occupant during a vehicle collision. The middle portion preferably is positioned corresponding to the chest of the occupant.

In the inflatable belt of the present invention, only the middle portion, which is positioned at the middle in the longitudinal direction of the belt body and contributes to reducing the impact, is wide and a portion, which is positioned on one end or both ends and does not directly contribute to reducing the impact, is narrow, so that the volume of the inflatable belt, when inflated, can be ensured without increasing the output of a gas. As a result, the ability to reduce impact and protect the occupant are improved.

According to the present invention, the belt body further includes a gas introducing portion extending over a length D from the first end in the longitudinal direction and having a constant width; a portion extending over a length A from the gas introducing portion is a widening portion having a gradually increasing width; a portion extending over a length B from the widening portion is the middle portion having a wide width; and a portion extending over a length C from the middle portion to the other end is a narrowing portion having a gradually decreasing width. Assuming that the sum (A + B + C) of the lengths A, B, C is 100 %, A, B, and C are preferably as follows:

    10% ≤ A ≤ 50%;
    0% ≤ B ≤ 80%; and
    10% ≤ C ≤ 50%.

As described in the above, in the inflatable belt of the present invention, the volume of the inflatable belt when inflated is ensured without increasing the output of a gas generator or may even reduce the output of the gas generator, thereby improving impact reduction and protection to the occupant.

Additional modifications and advantages may readily appear to one skilled in the art. The invention, therefore, is not limited in to the specific details set forth herein. Accordingly, various modifications may be made without departing from the spirit or scope of the invention as defined by the appended claims and their equivalents.

**Claims**

1.   An inflatable belt for protecting an occupant in a vehicle seat, into which a gas is introduced through one end to inflate the inflatable belt, the inflatable belt comprising:

    an elongated belt body, into which the gas is introduced, having a wide portion, widening and narrowing portions, and first and second ends, wherein a width of at least one of the widening and narrowing portions decreases from the wide portion to the respective first and second ends; and
    a cover enclosing the elongated belt body.

2.   An inflatable belt as claimed in claim 1, wherein the widening portion has a gradually increasing width from the first end to the wide portion.

3.   An inflatable belt as claimed in claim 1, wherein the narrowing portion has a gradually decreasing width from the wide portion to the second end of the inflatable belt.

4.   An inflatable belt as claimed in claim 1, wherein the elongated belt body further includes a gas introducing portion having a constant width;

    wherein the widening portion has a gradually increasing width from the first end to the wide portion and has a percentage length A;
    wherein the wide portion has a percentage length B;
    wherein the narrowing portion has a gradually decreasing width from the wide portion to the second end of the inflatable belt and has a percentage length C;
    wherein a sum of A + B + C of the percentage lengths A, B, C is 100 %; and
    wherein A is between 10% and 50%, B is between 0% and 80%, and C is between 10% and 50%.

5.   An inflatable belt as claimed in claim 4, wherein A is between 20% and 40%, B is between 20 and 60%, and C is between 20 and 40%.

(a)

(b)

Fig 1

( a )

( b )

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 97 23367 A (UNIVERSAL PROPULSION CO INC) 3 July 1997 (1997-07-03) <br> * abstract * <br> * page 22, line 1-6; figure 5 * <br> --- | 1-3 | B60R21/18 |
| A | US 3 888 503 A (HAMILTON BRIAN K) 10 June 1975 (1975-06-10) <br> * figure 1 * <br> --- | 1,2 | |
| A | DE 37 14 088 A (MESSERSCHMITT BOELKOW BLOHM) 1 December 1988 (1988-12-01) <br> * abstract * <br> * column 3, line 37-59; figure 1 * <br> --- | 1 | |
| A | US 5 465 999 A (TANAKA YOSHIHIKO ET AL) 14 November 1995 (1995-11-14) <br> * column 8, line 26 - column 9, line 18; figure 7 * <br> ----- | 4 | |
| | | | TECHNICAL FIELDS SEARCHED (Int.Cl.6) |
| | | | B60R |

The present search report has been drawn up for all claims

| Place of search | Date of completion of the search | Examiner |
|---|---|---|
| BERLIN | 7 October 1999 | Petersson, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                    EP 99 11 1129

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-1999

| Patent document cited in search report | | Publication date | Patent family member(s) | | Publication date |
|---|---|---|---|---|---|
| WO 9723367 | A | 03-07-1997 | CN | 1209098 A | 24-02-1999 |
|  |  |  | EP | 0868327 A | 07-10-1998 |
| US 3888503 | A | 10-06-1975 | NONE | | |
| DE 3714088 | A | 01-12-1988 | DE | 3744737 A | 02-02-1989 |
|  |  |  | JP | 1009049 A | 12-01-1989 |
|  |  |  | US | 4941710 A | 17-07-1990 |
|  |  |  | US | 5039168 A | 13-08-1991 |
| US 5465999 | A | 14-11-1995 | NONE | | |

For more details about this annex : see Official Journal of the European Patent Office, No. 12/82